# FASCICULE DE BREVET EUROPEEN

(11) **EP 1 198 681 B1**
(45) Date de publication et mention de la délivrance du brevet: **20.04.2005**
(21) Numéro de dépôt: 00953035.3
(22) Date de dépôt: 12.07.2000
(51) Int. Cl.: F16L 21/04, F16L 21/08

(54) **DISPOSITIF DE REMPLISSAGE D'UN RESERVOIR A LIQUIDE**
EINFÜLLVORRICHTUNG EINES FLÜSSIGKEITSBEHÄLTERS
DEVICE FOR FILLING A LIQUID TANK

(30) Priorité: 15.07.1999 FR 9909219
(43) Date de publication de la demande: 24.04.2002
(73) Titulaire: Inergy Automotive Systems Research (SA), 1120 Bruxelles (BE)
(72) Inventeur: PERCEBOIS, Serge, F-53230 Courbeveille (FR); IRIBARNE, Alain, F-53000 Laval (FR)
(74) Mandataire: Decamps, Alain René François
(86) Numéro de dépôt international: PCT/EP2000/006630
(87) Numéro de publication internationale: WO 2001/006165

(56) Documents cités:
- DE-U- 29 507 683
- FR-A- 681 220
- US-A- 2 441 344
- US-A- 4 936 544

## Description

La présente invention concerne un dispositif de remplissage d'un réservoir à liquide, en particulier d'un réservoir à carburant.

Les réservoirs à liquide sont souvent équipés d'une tubulure de remplissage indépendante, c'est-à-dire qui n'en fait pas partie intégrante mais qui y est fixée au moyen d'un système de raccordement Ces systèmes doivent naturellement répondre à différentes exigences, notamment d'étanchéité, dont certaines sont spécifiques au domaine concerné. En particulier dans le domaine des véhicules munis de moteurs à combustion interne, tels qu'automobiles et camions, des normes de plus en plus strictes doivent être respectées en ce qui concerne les émissions gazeuses de carburant par fuite ou par perméation à travers la paroi des organes destinés à contenir ou véhiculer le carburant. En outre, il est essentiel qu'en cas d'accident, les risques de rupture et de fuite de carburant hors du réservoir soient réduits au minimum. Enfin, il est souhaitable que malgré toutes ces contraintes, le système de raccordement utilisé présente un faible coût de fabrication et de (dé)montage.

Le modèle d'utilité allemand DE-U-29507683 divulgue un dispositif de distribution de béton sous pression qui comprend :
- un embout tubulaire (50) ;
- une tubulure terminale (30) dont une première extrémité s'insère dans l'embout (50), qui présente sur sa surface extérieure une nervure circonférentielle (36) disposée à proximité de sa première extrémité ;
- un joint d'étanchéité cylindrique (44) disposé coaxialement entre la tubulure (30) et l'embout (50) et dont la position axiale se situe entre la nervure (36) et l'embout (50) ;
- une corniche circonférentielle (54) intérieure à l'embout (50) ;
- une pièce de serrage (74) disposée coaxialement à l'extérieur de l'embout (50), munie de moyens de blocage permettant de l'immobiliser par rapport à l'embout (50) et d'un ressaut circonférentiel dirigé vers l'intérieur, situé à proximité de celle de ses extrémités qui est la plus éloignée de l'embout (50);
- ledit ressaut de la pièce de serrage (74) permettant d'exercer indirectement une pression axiale sur la nervure circonférentielle (36) de la tubulure (30) en direction de l'embout (50), provoquant ainsi la compression axiale du joint d'étanchéité (44) entre la nervure circonférentielle (36) de la tubulure (30) et la corniche (54) intérieure de l'embout (50), de manière à assurer un raccordement étanche entre l'embout (50) et la tubulure (30).

Le document US-A-4 936 544, qui constitue l'art antérieur le plus proche, montre un dispositif selon le préambule de la revendication 1.

A cette fin, la présente invention suivant la revendication 1 concerne un dispositif de remplissage d'un réservoir pour liquide muni d'un embout tubulaire s'étendant vers l'extérieur, ledit dispositif comprenant :
- une tubulure de remplissage flexible dont une première extrémité s'insère dans l'embout, présentant sur sa surface extérieure une nervure circonférentielle disposée à proximité de sa première extrémité ;
- au moins un joint d'étanchéité cylindrique disposé coaxialement entre la tubulure et l'embout, et dont la position axiale se situe entre la nervure de la tubulure et une corniche circonférentielle intérieure à l'embout ;
- une pièce de serrage, disposée coaxialement à l'extérieur de l'embout, munie de moyens de blocage permettant de l'immobiliser par rapport à l'embout, munie d'un ressaut circonférentiel dirigé vers l'intérieur, situé à proximité de celle de ses extrémités qui est la plus éloignée du réservoir ;
ledit ressaut de la pièce de serrage permettant d'exercer directement ou indirectement une pression axiale sur la nervure circonférentielle de la tubulure en direction du réservoir, provoquant ainsi la compression axiale du joint d'étanchéité entre la nervure circonférentielle de la tubulure et la corniche intérieure de l'embout, de manière à assurer un raccordement étanche entre l'embout et la tubulure.

Le réservoir peut être de forme et de dimensions quelconque ; il peut également être réalisé en un matériau quelconque. Le dispositif de l'invention a cependant été tout particulièrement développé dans la perspective d'une application à un réservoir à base de matière plastique, fabriqué par exemple par extrusion-soufflage.

L'embout tubulaire peut être de section quelconque ; il est le plus souvent de section substantiellement circulaire. L'embout peut faire partie intégrante du réservoir ou lui avoir été fixé hermétiquement - par exemple par soudage - après la fabrication du réservoir proprement dit.

La corniche circonférentielle intérieure de l'embout comporte une surface de forme approximativement annulaire, substantiellement contenue dans un plan perpendiculaire à l'axe de l'embout. Cette corniche peut consister en une simple nervure circonférentielle aménagée à l'intérieur de l'embout. Cette corniche peut également constituer l'extrémité d'un tronçon de l'embout s'étendant vers le réservoir proprement dit et présentant un diamètre intérieur plus faible que le tronçon s'étendant depuis cette corniche vers l'extrémité de l'embout la plus éloignée du réservoir. La fonction de cette corniche sera explicitée en détail par la suite.

La tubulure de remplissage a pour fonction de permettre le remplissage du réservoir - sans fuites de liquide - à partir d'un point qui ne se trouve pas à proximité immédiate de son embout. Il est par exemple courant, dans le cas d'automobiles personnelles, que le réservoir à carburant soit situé à un endroit peu accessible, et relié par une tubulure de remplissage à un orifice obturable par un bouchon situé à un endroit aisément accessible de la carrosserie du véhicule. La tubulure peut être constituée d'un matériau quelconque, par exemple de métal ou d'une matière plastique rigide ou souple. En outre, le matériau doit présenter une imperméabilité suffisante vis-à-vis du liquide que doit contenir le réservoir. Si nécessaire, une imperméabilité accrue peut être conférée à une tubulure par des moyens bien connus en tant que tels, par exemple (dans le cas de tubulures en matière plastique) par adjonction d'une couche barrière (réalisée par exemple par coextrusion) ou par un traitement superficiel approprié (par exemple par fluoration).

La tubulure présente une section quelconque ; pour pouvoir s'insérer dans l'embout du réservoir, son extrémité doit cependant présenter une forme et des dimensions compatibles avec celles de l'embout. Généralement, la tubulure est de section circulaire.

Eventuellement, une ou plusieurs zones de la tubulure (éloignées de l'extrémité insérée dans l'embout du réservoir) peuvent présenter une souplesse accrue, par exemple grâce à des ondulations ou soufflets locaux (zones annelées). Cette souplesse facilite le (dé)montage du dispositif de remplissage, ou du réservoir complet si ce dispositif lui est fixé avant son montage. En outre, cette souplesse accroît la sécurité, en réduisant le risque de rupture ou d'arrachage de la tubulure au cas où l'une de ses extrémités se déplacerait accidentellement par rapport à l'autre.

La première extrémité de la tubulure a un diamètre extérieur inférieur au diamètre intérieur de l'embout du réservoir (ou, du moins, inférieur au diamètre que présente la section de l'embout la plus éloignée du réservoir proprement dit), de façon à pouvoir être insérée dans cet embout. En outre, elle a de préférence une surface extérieure substantiellement lisse (à l'exception d'une nervure périphérique, comme exposé ci-dessous). La tubulure présente, sur ladite surface extérieure et à proximité de cette première extrémité, une nervure annulaire continue faisant partie intégrante de la tubulure. Cette nervure présente de préférence une section substantiellement rectangulaire (en coupe par un plan diamétral).

Les joints d'étanchéité cylindriques utilisés présentent approximativement, en plan, la même forme que l'embout et la tubulure, par exemple une forme cylindrique. Le terme "cylindrique" utilisé ici indique seulement qu'il s'agit d'éléments comportant une ouverture centrale, et n'implique pas une correspondance rigoureusement exacte avec la définition d'un cylindre. Les joints ont généralement une symétrie de révolution, étant donné que la tubulure et l'embout présentent également, en général, une telle symétrie. La section des joints (par un plan contenant leur axe) est souvent de forme approximativement circulaire (joints toriques) ou approximativement rectangulaire (joints cylindriques). Ces joints sont maintenus sous pression axiale par la pièce de serrage, indirectement, c'est-à-dire par l'intermédiaire de la nervure circonférentielle de la tubulure et d'une ou éventuellement plusieurs entretoises cylindriques, comme exposé ci-dessous. Il va de soi que le ou les joints doivent être constitués d'un matériau résistant et imperméable au liquide que le réservoir est destiné à contenir.

La pièce de serrage peut être constituée du tout matériau adéquat, présentant une rigidité mécanique suffisante ; il peut avantageusement s'agir d'une matière plastique telle qu'un polyamide ou un polymère du propylène, éventuellement renforcés de fibres de renforcement. Cette pièce est généralement de forme globalement cylindrique, cette indication ne signifiant cependant pas forcément que la pièce de serrage présente une symétrie de révolution ; elle peut par exemple présenter une surface extérieure de section hexagonale (vue en plan, c'est-à-dire en coupe par un plan perpendiculaire à l'axe de ladite pièce).

Les moyens de blocage peuvent être quelconques ; il peut notamment s'agir d'un filetage, coopérant avec un filetage similaire réalisé sur la surface extérieure de l'embout du réservoir. Alternativement, ces moyens de blocage peuvent encore comprendre un ou plusieurs éléments de fixation distincts, par exemple une bague métallique présentant une section en U ou en V (en coupe par un plan diamétral), coopérant d'une part avec une protubérance circonférentielle disposée sur la surface extérieure de la pièce de serrage à proximité de son extrémité la plus proche du réservoir, et d'autre part avec une protubérance circonférentielle similaire (environ du même diamètre) disposée sur la surface extérieure de l'embout du réservoir, à proximité de son extrémité la plus éloignée du réservoir.

Le ressaut intérieur de la pièce de serrage peut être continu ou constitué de segments dont les extrémités sont séparées les unes des autres. Ce ressaut doit présenter des dimensions lui assurant une résistance mécanique suffisante. La fonction première de ce ressaut est d'exercer une pression sur la nervure circonférentielle de la tubulure en direction du réservoir. A cette fin, le ressaut comprend de préférence une surface annulaire substantiellement plane contenue dans un plan perpendiculaire à l'axe de la pièce de serrage. Cette pression peut être exercée directement - le ressaut entrant en contact avec la nervure - ou indirectement, par l'intermédiaire d'un élément intercalaire creux, substantiellement rigide, qualifié d'entretoise cylindrique. De préférence, la pièce de serrage exerce une pression sur la nervure circonférentielle de la tubulure par l'intermédiaire d'au moins une entretoise cylindrique. Cette entretoise peut être constituée d'un matériau quelconque, par exemple de métal ou d'une matière plastique ; comme exposé précédemment, le fait qu'elle soit cylindrique ne signifie pas qu'elle doit forcément répondre à toutes les caractéristiques d'un cylindre au sens géométrique du terme ; en particulier, elle peut être percée d'orifices ou de fentes en vue de l'alléger. Elle ne doit en effet répondre à aucune contrainte d'étanchéité. De même, plusieurs telles entretoises peuvent éventuellement être utilisées en combinaison, par exemple si on ne dispose pas d'une entretoise unique présentant la longueur souhaitée.

Sous l'effet de la pression du ressaut de la pièce de serrage, la nervure circonférentielle de la tubulure exerce à son tour une pression sur le joint d'étanchéité, décrit ci-dessus. Dans une variante particulièrement simple du dispositif qui n'est pas conforme à l'invention, le joint est unique, et entre en contact d'une part avec la nervure de la tubulure, et d'autre part avec la corniche circonférentielle intérieure de l'embout du réservoir, de manière à réaliser une liaison hermétique empêchant que le fluide contenu dans le réservoir ne s'en échappe en passant entre l'embout du réservoir et la tubulure. (En effet, le rôle de la pièce de serrage n'est pas d'assurer l'étanchéité du raccordement.)

Selon l'invention, l'étanchéité entre l'embout et la tubulure est assurée par deux joints cylindriques séparés par une entretoise cylindrique, l'un de ces joint étant en contact avec la nervure de la tubulure, et l'autre joint étant en contact avec la corniche circonférentielle intérieure de l'embout du réservoir. Il convient naturellement, dans ce cas, que la paroi latérale de l'entretoise utilisée soit résistante et imperméable par rapport au fluide que le réservoir est destiné à contenir. Cette construction est utile dans le cas où la distance entre la nervure de la tubulure et la corniche circonférentielle intérieure de l'embout du réservoir est élevée. Deux entretoises cylindriques, ou davantage, peuvent même être utilisées, pour autant qu'un joint d'étanchéité soit disposé entre chaque paire d'entretoises successives, ou que leur l'étanchéité soit assurée autrement dans leur zone de contact.

Comme on le constate, le dispositif de l'invention est capable d'être utilisé dans des configurations variées, et dispense ainsi le fabricant de réservoirs de disposer d'un grand stock de dispositifs de raccordement de types différents.

Sur le plan de la sécurité, et plus précisément de l'assurance de l'étanchéité en cas de chocs ou de déplacements accidentels de la tubulure, on notera tout d'abord que la nervure circonférentielle de la tubulure ne peut pas s'éloigner du réservoir, vu qu'elle est retenue par le ressaut intérieur de la pièce de serrage (soit directement, soit indirectement, par l'intermédiaire d'une entretoise). La tubulure ne peut donc pas se déconnecter du réservoir, ni s'en éloigner suffisamment pour provoquer une fuite au niveau du ou des joints d'étanchéité. La résistance du dispositif aux efforts de traction peut être améliorée si, comme exposé plus haut, la tubulure comprend une zone à soufflets ou annelée, permettant un certain déplacement axial et latéral de l'extrémité de la tubulure la plus éloignée du réservoir sans provoquer sa déconnexion ni sa rupture.

Dans le sens opposé, la tubulure peut s'enfoncer quelque peu à l'intérieur de l'embout, et ce d'une distance qui est d'une part déterminée par la forme et les propriétés mécaniques des joints d'étanchéité, et qui est d'autre part limitée par la présence éventuelle, dans l'embout du réservoir, d'un ressaut ou de protubérances intérieurs empêchant que l'extrémité de la tubulure ne pénètre dans le réservoir.

L'une des fonctions de la ou des entretoises éventuelles disposées entre le ressaut de la pièce de serrage et la nervure de la tubulure est d'éviter, ou du moins de réduire à des niveaux acceptables, une éventuelle fuite au niveau du ou des joints d'étanchéité, fuite qui serait due à une éventuelle flexion imposée à la tubulure (flexible) à une certaine distance du réservoir. En effet, cette ou ces entretoises ont notamment pour effet d'imposer une linéarité substantielle à la portion de la tubulure adjacente à sa première extrémité, et en particulier aux endroits où l'étanchéité est réalisée, ce qui évite également toute fuite accidentelle.

Selon une variante extrêmement avantageuse, le dispositif de l'invention comprend en outre un dispositif anti-refoulement évitant que le liquide contenu dans le réservoir ne s'en échappe en cas de remplissage excessif ou en cas d'arrachement accidentel de la tubulure.

Les dispositifs utilisables à cette fin sont bien connus en tant que tels. Un exemple en est notamment décrit dans le document FR-A-2419834.

### Description des dessins

Les figures annexées illustrent, de façon non limitative, différentes variantes de réalisation du dispositif .

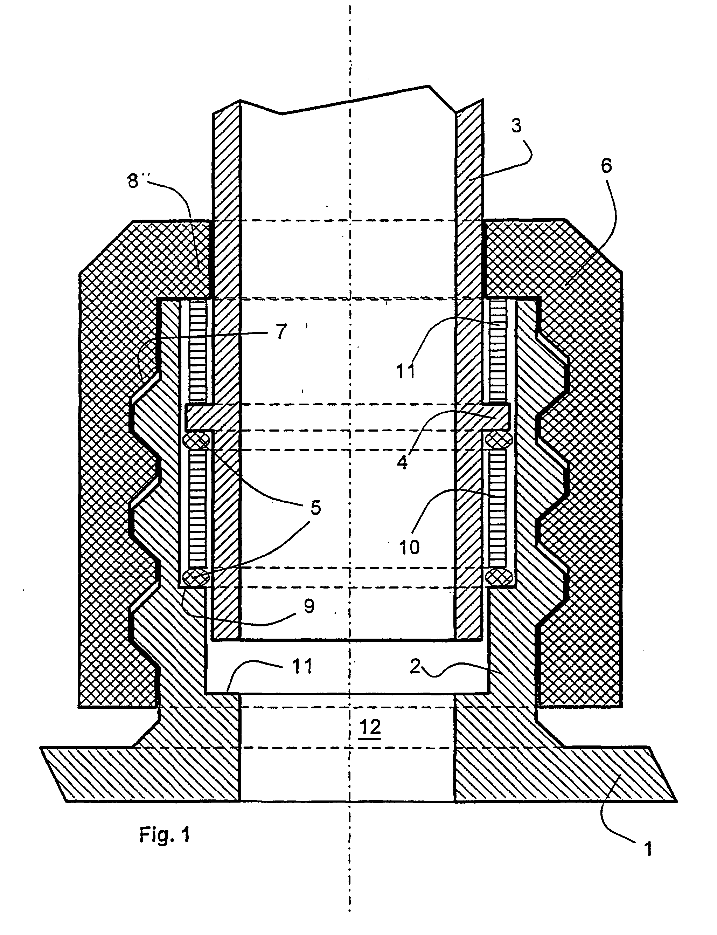

La figure 1 représente un dispositif selon l'invention de remplissage d'un réservoir pour liquide (1) (seule une petite partie de sa paroi est représentée). Le réservoir comprend un embout tubulaire (2); s'étendant vers l'extérieur, soudé hermétiquement au réservoir, et présentant une corniche intérieure (9), annulaire, correspondant à un rétrécissement (12) de la section intérieure de l'embout dans le sens extérieur > intérieur.

Ce dispositif comprend :
- une tubulure de remplissage flexible (3) dont une première extrémité s'insère dans l'embout (2), présentant sur sa surface extérieure une nervure circonférentielle (4) disposée à proximité de cette première extrémité ;
- deux joints d'étanchéité toriques (5) disposés coaxialement entre la tubulure (3) et l'embout (2), séparés par une entretoise cylindrique rigide (10) et dont la position axiale se situe entre la nervure (4) de la tubulure et la corniche intérieure (9) de l'embout ;
- une pièce de serrage (6) cylindrique, disposée coaxialement à l'embout (2), munie d'un filetage (7) coopérant avec un filetage similaire aménagé sur la surface extérieure de l'embout, et munie d'un ressaut circonférentiel continu (8) dirigé vers l'intérieur.

Par l'intermédiaire d'une seconde entretoise cylindrique rigide (11), le ressaut (8) de la pièce de serrage (6) exerce une pression axiale sur la nervure circonférentielle (4) de la tubulure, provoquant ainsi la compression axiale des joints d'étanchéité (5), de part et d'autre de l'entretoise (10), entre cette nervure et la corniche (9) intérieure de l'embout (2), assurant ainsi l'étanchéité entre l'embout (2) et la tubulure (3).

Le rétrécissement (12) de l'embout (2) limite l'enfoncement de la tubulure (3) et évite ainsi que son extrémité ne pénètre accidentellement dans le réservoir.

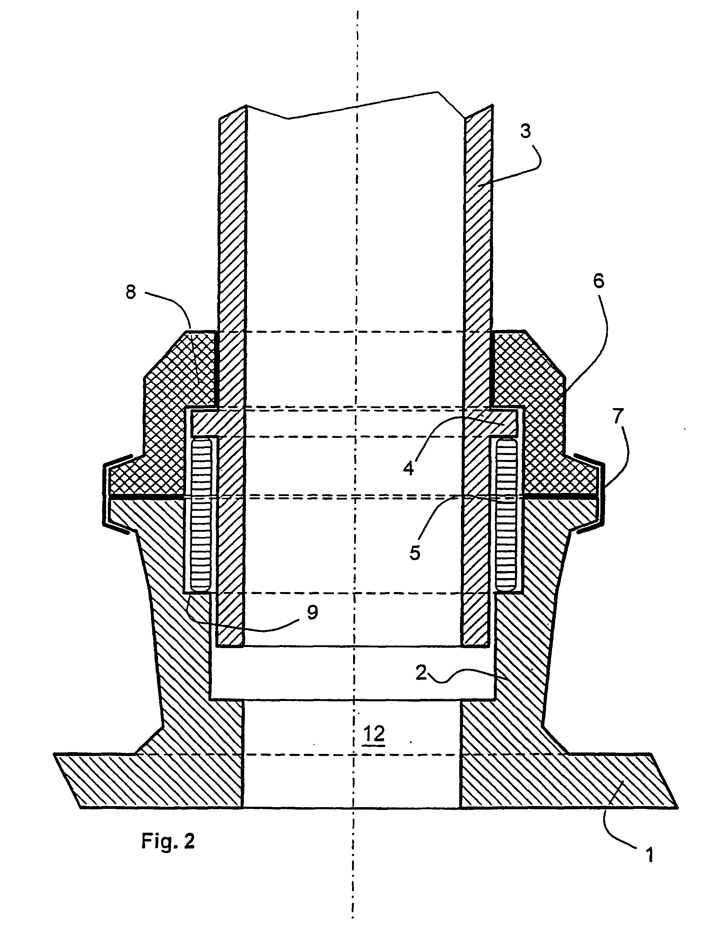

La figure 2 représente un autre dispositif qui n'est pas conforme à l'invention, comprenant un nombre de pièces plus faible. Le ressaut (8) de la pièce de serrage (6) exerce de manière directe une pression sur la nervure (4) de la tubulure (3), et cette nervure (4) n'est séparée de la corniche intérieure (9) de l'embout (2) que par un joint d'étanchéité (5), de forme approximativement cylindrique. La pièce de serrage (6) est immobilisée par rapport à l'embout (2) au moyen d'une bague métallique (7) munie d'une vis de serrage (non-représentée).

## Revendications

1. Dispositif de remplissage d'un réservoir contenant un dispositif de raccordement comprenant :
- un embout tubulaire (2) muni intérieurement d'une corniche circonférentielle (9) située à l'une de ses extrémités ;
- une tubulure de remplissage (3) dont une première extrémité s'insère dans l'embout (2) par l'extrémité de l'embout opposée à celle contenant la corniche (9), présentant sur sa surface extérieure une nervure circonférentielle (4) disposée à proximité de la première extrémité de la tubulure (3) ;
- au moins deux joints d'étanchéité cylindriques (5) disposés coaxialement entre la tubulure (3) et l'embout (2) ;
- au moins une entretoise cyclindrique (10) disposée entre les deux joints d'étanchéité (5), coaxialement entre la tubulure (3) et l'embout (2) ;
- une pièce de serrage (6), disposée coaxialement à l'extérieur de l'embout (2), munie de moyens de blocage (7) permettant de l'immobiliser par rapport à l'embout (2);
dans lequel l'embout tubulaire (2) s'étend vers l'extérieur du réservoir, la tubulure de remplissage (3) est flexible, la position axiale des joints d'étanchéité se situe uniquement entre la nervure (4) de la tubulure et la corniche (9), **caractérisé en ce que**
a) le réservoir est un réservoir pour liquide,
b) la pièce de serrage (6) est munie d'un ressaut circonférentiel (8) dirigé vers l'intérieur, situé à proximité de l'autre extrémité de la tubulure (3); ledit ressaut (8) de la pièce de serrage (6) permettant d'exercer directement ou indirectement une pression axiale sur la nervure circonférentielle (4) de la tubulure en direction de la corniche (9),
c) un des joints est en contact direct avec la nervure (4) et l'autre joint est en contact direct avec la corniche (9), la pression axiale de la pièce de serrage (6) provoquant la compression axiale des joints d'étanchéité (5), de manière à assurer un raccordement étanche entre l'embout (2) et la tubulure (3).

2. Dispositif de raccordement selon la revendication 1, comprenant en outre un dispositif anti-refoulement évitant que le liquide contenu dans le réservoir ne s'en échappe en cas de remplissage excessif ou en cas d'arrachement accidentel de la tubulure.

3. Dispositif selon l'une des revendications précédentes, dans lequel la pièce de serrage (6) exerce une pression sur la nervure circonférentielle (4) de la tubulure (3) par l'intermédiaire d'au moins une entretoise cylindrique (11).

## Patentansprüche

1. Vorrichtung zum Füllen eines Behälters, der eine Anschlußvorrichtung aufweist, mit:
- einem rohrförmigen Stutzen (2), der in seinem Inneren an einem seiner Enden mit einem Umfangsabsatz (9) ausgestattet ist;
- einem Füllrohr (3), das mit einem ersten Ende in den Stutzen (2) auf der dem Absatz (9) gegenüberliegenden Seite des Stutzens eingeführt und an seiner Außenseite mit einer Umfangsrippe (4) versehen ist, die in der Nähe des ersten Endes des Rohres (3) liegt;
- zumindest zwei zylindrischen Dichtungen (5), die koaxial zwischen dem Rohr (3) und dem Stutzen (2) angeordnet sind;
- zumindest einer zylindrischen Buchse (10), die zwischen den beiden Dichtungen (5) koaxial zwischen dem Rohr (3) und dem Stutzen (2) liegt;
- einem Verriegelungsteil (6), der koaxial an der Außenseite des Stutzens (2) vorgesehen und mit Blockiermitteln (7) ausgestattet ist, die es ermöglichen, ihn bezüglich des Stutzens (2) zu fixieren;
wobei der rohrförmige Stutzen (2) sich gegen die Außenseite des Behälters erstreckt, das Füllrohr (3) flexibel und die Axialposition der Dichtungen ausschließlich zwischen der Rippe (4) und dem Absatz (9) vorgesehen ist,
**dadurch gekennzeichnet, daß**
a) der Behälter ein Flüssigkeitsbehälter ist,
b) der Verriegelungsteil (6) mit einem nahe dem anderen Ende des Rohres (3) nach innen gerichteten Umfangsvorsprung (8) ausgestattet ist; wobei der Vorsprung (8) des Verriegelungsteiles (6) es gestattet, direkt oder indirekt einen Axialdruck auf die Umfangsrippe (4) des Rohres in Richtung des Absatzes (9) auszuüben,
c) eine der Dichtungen in direktem Kontakt mit der Rippe (4) und die andere Dichtung in direktem Kontakt mit dem Absatz (9) ist, wobei der Axialdruck des Verriegelungsteiles (6) ein axiales Zusammendrücken der Dichtungen (5) hervorruft, derart, daß eine dichte Verbindung zwischen dem Stutzen (2) und dem Rohr (3) geschaffen wird.

2. Anschlußvorrichtung nach Anspruch 1, die ferner eine Anti-Staueinrichtung aufweist, die verhindert, daß im Behälter enthaltene Flüssigkeit im Falle eines übermäßigen Befüllens oder im Falle eines unbeabsichtigten Abziehens des Rohres austritt.

3. Vorrichtung nach einem der vorhergehenden Ansprüche, bei welcher der Verriegelungsteil (6) einen Druck auf die Umfangsrippe (4) des Rohres (3) über zumindest eine zylindrische Hülse (11) ausübt.

## Claims

1. Device for filling a tank containing a connection device comprising:
■ a tubular endpiece (2) having on its inside a peripheral shoulder (9) at one of its ends;
■ a filling pipe (3) a first end of which is inserted in the endpiece (2) via the end of the endpiece opposite that having the shoulder (9), having on its outer surface a peripheral rib (4) located near the first end of the pipe (3);
■ at least two cylindrical seals (5) placed coaxially between the pipe (3) and the endpiece (2);
■ at least one cylindrical spacer (10) placed between the two seals (5), coaxially between the pipe (3) and the endpiece (2);
■ a clamping piece (6), placed coaxially outside the endpiece (2), having locking means (7) for immobilizing it with respect to the endpiece (2);
in which the tubular endpiece (2) extends outwards from the tank, the filling pipe (3) is flexible, the axial position of the seals is located only between the rib (4) of the pipe and the shoulder (9), **characterized in that**
a) the tank is a liquid tank
b) the clamping piece (6) has an inwardly projecting peripheral protuberance (8), located near the other end of the pipe (3), the said protuberance (8) of the clamping piece (6) making it possible to exert, directly or indirectly, axial pressure on the peripheral rib (4) of the pipe in the direction of the shoulder (9),
c) one of the seals is in direct contact with the rib (4) and the other seal is in direct contact with the shoulder (9), the axial pressure of the clamping piece (6) causing the seals (5) to be axially compressed so as to ensure a leaktight connection between the endpiece (2) and the pipe (3).

2. Connection device according to Claim 1, which further comprises a flowback prevention device preventing the liquid contained in the tank from escaping therefrom in the event of overfilling or if the pipe is accidentally pulled away.

3. Device according to one of the preceding claims, in which the clamping piece (6) exerts pressure on the peripheral rib (4) of the pipe (3) via at least one cylindrical spacer (11).
